# DEMANDE DE BREVET EUROPEEN

(11) **EP 0 801 379 A1**
(43) Date de publication de la demande: **15.10.1997**
(21) Numéro de dépôt: 97400669.4
(22) Date de dépôt: 25.03.1997
(51) Int. Cl.: G11B 5/33, G11B 5/37

(54) **Procédé de réalisation d'une tête magnétique à détecteur de champ à champ à semiconducteur et tête obtenue par ce procédé**

(30) Priorité: 12.04.1996 FR 9604585
(71) Demandeur: SILMAG, 38524 Saint-Egrève Cedex (FR)
(72) Inventeur: Lazzari, Jean-Pierre, 38700 Corenc (FR)
(74) Mandataire: Dubois-Chabert, Guy

(57) **Abrégé**

Selon l'invention, on réalise un premier sous-ensemble sur un premier substrat semiconducteur (12) avec une partie du circuit magnétique (14,16₁,16₂,32₁,32₂,18). Puis, sur un second substrat semiconducteur (40) approprié, on réalise un empilement de couches semiconductrices (44,46,48,50). On assemble les deux et l'on fait disparaître le second substrat semiconducteur. On forme le détecteur (60) sur le premier ensemble et l'on complète le circuit magnétique par les pièces polaires (82₁,82₂).

Application à l'enregistrement magnétique.

## Description

### Domaine technique

La présente invention a pour objet un procédé de réalisation d'une tête magnétique à détecteur de champ à semiconducteur et une tête obtenue par ce procédé. L'invention peut être utilisée dans l'enregistrement d'informations sur disques, bandes, etc...

### Etat de la technique antérieure

On connaît déjà des têtes magnétiques comprenant, comme élément sensible au champ magnétique, un dispositif à semiconducteur. La figure 1 annexée montre une tête de ce genre, telle que décrite dans le brevet français FR-A-2 700 633.

La tête représentée comprend un substrat semiconducteur 2, une pièce magnétique inférieure en deux parties 3 et 4 séparées par un entrefer, un détecteur de champ magnétique 5, par exemple à effet HALL situé entre les deux parties 3 et 4, deux piliers magnétiques 6 et 7, deux pièces polaires 8 et 9 séparées par un entrefer 10 et un enroulement conducteur 11 entourant les piliers magnétiques. L'ensemble est noyé dans un isolant 12.

Pour réaliser une telle tête, on commence par former le détecteur 5 sur le substrat semiconducteur 2, puis on forme, autour de ce détecteur, le circuit magnétique : pièces magnétiques 3, 4, piliers 6, 7, enroulement 11, pièces polaires 8, 9.

Bien que donnant satisfaction à certains égards, cette technique présente des inconvénients :
- le champ magnétique à lire étant produit dans l'entrefer 10, le détecteur 5 est très éloigné de celui-ci et le champ de lecture au niveau du détecteur 5 est très affaibli ; de plus, ce champ a dû parcourir un chemin assez long dans le circuit magnétique (pièces polaires, piliers, pièces inférieures) et se trouve donc affecté par des bruits d'origine magnétique, qui vont détériorer la qualité du signal de lecture ;
- l'élément semiconducteur 5 est réalisé sur le substrat semiconducteur 2 ; celui-ci devrait donc présenter une très forte mobilité électronique pour être compatible avec ce genre de dispositif ; or, cette caractéristique est en général incompatible avec d'autres caractéristiques exigées pour le substrat, à savoir, d'abord une certaine robustesse, car le substrat devra constituer le patin de vol et ensuite une faible résistivité car diverses pièces magnétiques seront obtenues par croissance électrolytique par passage d'un courant à travers le substrat ;
- enfin, si, au cours de la réalisation de la partie magnétique de la tête, un problème survient, l'élément semiconducteur, qui a été réalisé en premier, sera perdu.

La présente invention a pour but de remédier à ces inconvénients.

### Exposé de l'invention

Selon l'invention, on réalise d'abord une grande partie du circuit magnétique et on ne constitue le détecteur de champ magnétique qu'en fin de procédé. L'élément semiconducteur sensible au champ va donc se trouver placé au voisinage immédiat de l'entrefer, ce qui va lui assurer de meilleures conditions de fonctionnement. Par ailleurs, l'invention préconise de dissocier les fonctions exigées pour le substrat semiconducteur, en utilisant deux substrats distincts, l'un, robuste et de faible résistivité, qui va servir de patin de vol et de support classique au circuit magnétique, l'autre, de grande mobilité électrique, qui va servir de substrat pour la réalisation du détecteur magnétique. Ces deux substrats et les moyens qu'ils supportent (à savoir, respectivement, une partie du circuit magnétique et l'élément semiconducteur détecteur de champ magnétique) seront retournés, plaqués l'un sur l'autre et assemblés. Le substrat à grande mobilité sera ensuite éliminé, laissant l'élément détecteur sur l'ensemble magnétique. Le circuit magnétique pourra être ensuite achevé autour de l'élément semiconducteur.

De façon précise, l'invention a donc pour objet un procédé de réalisation d'une tête magnétique à détecteur de champ à semiconducteur, caractérisé par le fait qu'il comprend les opérations suivantes :
- on réalise un premier sous-ensemble comprenant un premier substrat semiconducteur et un circuit magnétique et on recouvre ce premier sous-ensemble d'une première couche en un premier matériau isolant,
- on réalise un second sous-ensemble comprenant un second substrat semiconducteur recouvert de couches semiconductrices aptes à constituer un détecteur de champ magnétique et on recouvre ce second sous-ensemble d'une seconde couche en un second matériau isolant,
- on assemble le premier et le second sous-ensembles en mettant en contact les première et seconde couches en premier et second isolants,
- on fait disparaître le second substrat semiconducteur,
- on grave les couches semiconductrices pour constituer un détecteur de champ magnétique,
- on dépose sur le détecteur une couche isolante,
- on forme sur cette couche isolante deux pièces polaires séparées par un entrefer.

L'invention a également pour objet une tête magnétique obtenue par ce procédé. Cette tête magnétique à détecteur de champ à semiconducteur comprend, sur un premier substrat semiconducteur, une partie de circuit magnétique, deux pièces polaires séparées par un entrefer et, entre au moins l'une desdites pièces polaires et la partie de circuit magnétique, un détecteur de champ à semiconducteur.

### Brève description des dessins

- la figure 1, déjà décrite, montre, en coupe, une tête magnétique de l'art antérieur à élément semiconducteur ;
- la figure 2 montre un premier sous-ensemble comprenant un premier substrat semiconducteur et un circuit magnétique ;
- la figure 3 illustre un second sous-ensemble à couches semiconductrices déposées sur un second substrat semiconducteur monocristallin ;
- la figure 4 montre un ensemble rassemblant le premier et le second sous-ensembles ;
- la figure 5 montre, en coupe, le premier sous-ensemble équipé du dispositif à semiconducteur ;
- la figure 6 montre les mêmes moyens mais en vue de dessus ;
- la figure 7 illustre une étape de dépôt d'une couche d'isolant ;
- la figure 8 illustre la réalisation de plots de contact, de plots de sortie et de connexions électriques ;
- la figure 9 montre, en coupe, une tête magnétique selon l'invention,
- la figure 10 illustre une variante à deux détecteurs ;
- la figure 11 montre la forme du signal de lecture correspondant.

### Exposé détaillé de modes de réalisation

Sur la figure 2 est représenté un premier sous-ensemble qui est obtenu en partant d'un premier substrat semiconducteur 12. Ce semiconducteur peut être du silicium dopé avec du phosphore pour le rendre conducteur afin de faciliter les différentes opérations de croissance électrolytique. Dans ce substrat 12, on creuse un caisson dans lequel on forme une pièce magnétique inférieure 14. On réalise ensuite deux piliers magnétiques 16₁, 16₂, puis un bobinage conducteur 18 et deux concentrateurs de flux 32₁, 32₂. Toutes ces pièces magnétiques peuvent être obtenues par croissance électrolytique. On planarise la surface supérieure de l'ensemble et on dépose une première couche d'isolant 34, qui peut être avantageusement de la silice. Cette couche peut avoir une épaisseur de 0,05 à 5 micromètres.

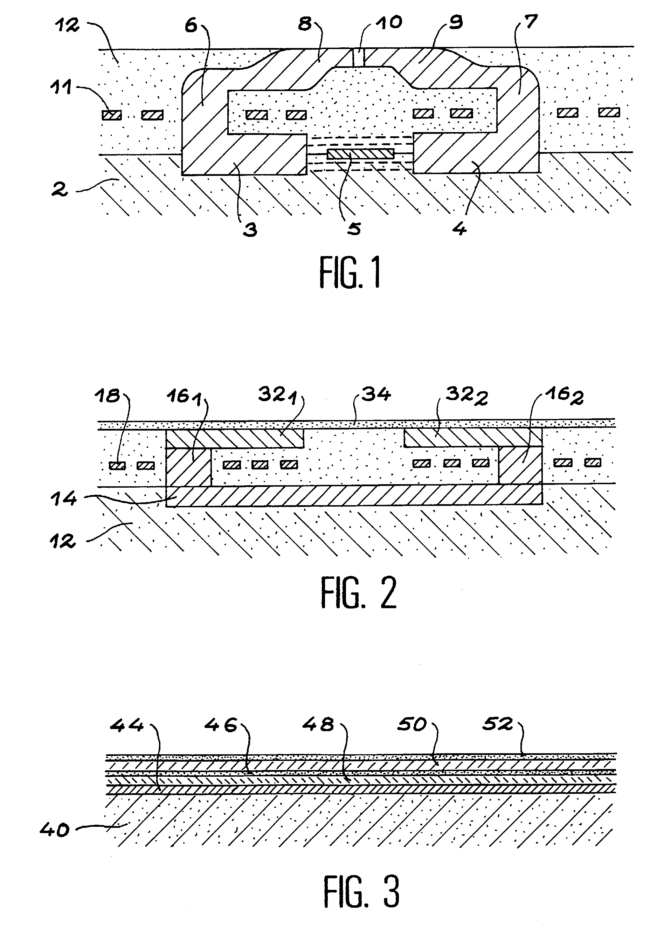

Par ailleurs, on réalise un second sous-ensemble qui est illustré sur la figure 3. Pour cela, on utilise un second substrat semiconducteur 40, qui présente la particularité d'avoir une bonne mobilité électronique. On peut rappeler que, pour le silicium monocristallin, la mobilité n'est que de 1000 cm²/Vs et qu'elle passe à 6000 cm²/Vs pour l'arséniure de gallium AsGa. Pour l'arséniure de gallium revêtu d'une couche mince à puits quantiques, la mobilité est comprise entre 15 000 et 20 000 cm²/Vs. On supposera par la suite qu'on utilise l'arséniure de gallium avec couches à puits quantiques. Ce type de substrat est disponible commercialement.

Sur un tel substrat, on dépose, par exemple, une première couche 44 en AlAs, ou en AlGa, ou en AlGaAs. Le dépôt de ces couches peut s'effectuer par jet moléculaire afin de conserver la qualité monocristalline du substrat. Cette couche 44, qui est donc épitaxiée sur le substrat, peut être dopée avec différents composants III-V. Cette couche va constituer une couche d'arrêt pour des opérations de gravure ultérieures.

On dépose ensuite un empilement de couches aptes à constituer un détecteur de champ magnétique. Cet empilement peut comprendre trois couches, la couche à puits quantiques proprement dite 46, d'épaisseur voisine de 15 nanomètres, encadrée par deux couches 48 et 50 par exemple en GaAs (dopé ou non). Toutes ces couches peuvent être déposées par jet moléculaire. Elles peuvent être dopées pour augmenter la mobilité tout en conservant une résistivité faible.

L'empilement est ensuite recouvert d'une deuxième couche d'isolant 52. De préférence, cet isolant est le même que celui qui constitue la couche isolante 34 recouvrant le premier sous-ensemble. Il peut donc s'agir de silice, d'épaisseur comprise entre 0,05 et 5 micromètres.

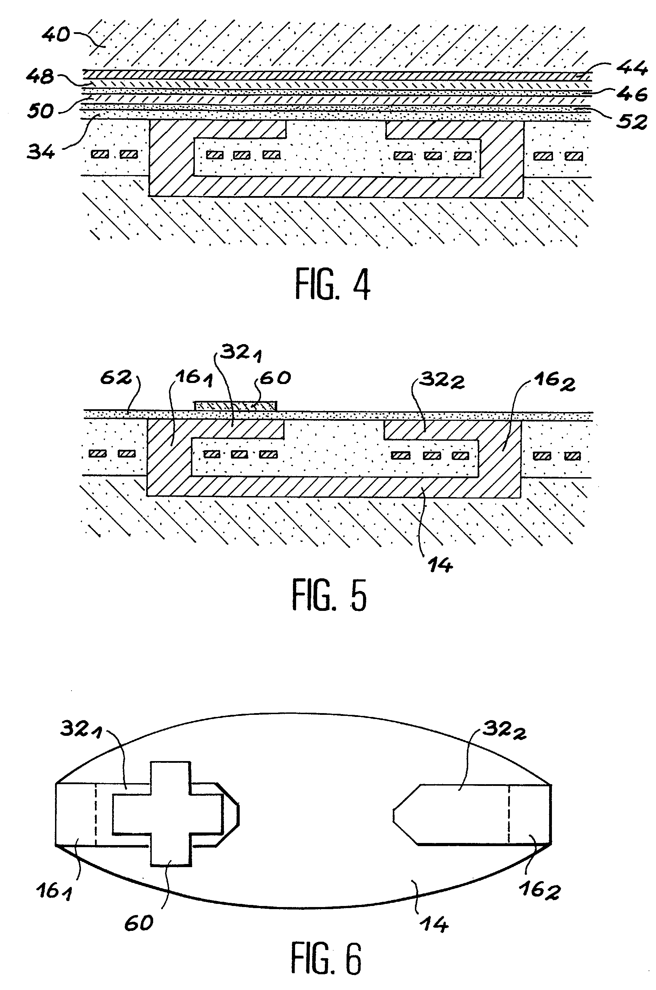

Les deux sous-ensembles des figures 2 et 3 ayant été obtenus, on vient les assembler en appliquant les deux couches isolantes 34 et 52 l'une sur l'autre, comme le montre la figure 4. Pour solidariser les deux sous-ensembles, il faut opérer en ne dépassant pas une température de l'ordre de 200 à 230°C, pour ne pas détériorer l'empilement de couches, en particulier la couche 46 sensible au champ magnétique. De nombreux procédés sont possibles, soit de collage soit de soudage. On peut s'y prendre en particulier comme suit. On effectue un traitement de surface des couches 34 et 52. Ce traitement a pour but d'obtenir, dans la silice, des liaisons Si ouvertes. Ce traitement peut consister en un décapage, une gravure ionique, etc... Lorsqu'on applique l'une sur l'autre des surfaces ainsi traitées, elles se collent naturellement. Un recuit sous vide à 200°C assure la liaison définitive entre les deux surfaces.

On pourrait naturellement employer d'autres méthodes, comme le collage avec de la résine ou une couche organique appropriée, la soudure métallique à basse température (à base d'étain/plomb) de deux couches de chrome-cuivre déposées préalablement sur les couches de silice.

Lorsque les deux sous-ensembles sont assemblés, un amincissement mécanique du substrat 40 est pratiqué. Cet amincissement mécanique permet de réduire l'épaisseur du substrat en partant d'une épaisseur standard de 600 micromètres et en la réduisant à environ 100 micromètres.

Une attaque du substrat 40 est ensuite pratiquée. Cette attaque peut être soit chimique (avec de l'acide citrique), soit sèche (avec du SiCl₄). Ces attaques s'arrêtent sur la couche 44 d'AlAs (ou AlGa), qui a une vitesse de gravure très faible par l'acide citrique ou SiCl₄.

On grave ensuite la couche 44 sélectivement, en utilisant une gravure chimique à base d'acide fluorhydrique HF, sur toute la surface de la tranche, afin de ne laisser que l'empilement 60 de couches à puits quantiques comme le montre la figure 5.

Comme la couche 44 de AlGa ou AlAs ou AlGaAs se grave sélectivement par rapport au substrat 40 en GaAs, il est possible de graver cette couche sans amincissement du substrat en GaAs. La partie arrière du substrat se détache donc de la partie soudée sur le substrat silicium. Cette technique est avantageuse car elle permet de réutiliser la même tranche de GaAs plusieurs fois.

A ce stade de la fabrication, on retrouve donc sur la surface de l'ensemble, et comme représenté, sur la surface un élément 60 sensible au champ magnétique reposant sur une couche isolante 62 constituée par les deux couches isolantes 34 et 52.

La figure 6 montre ce sous-ensemble en vue de dessus (le bobinage conducteur n'a pas été représenté pour plus de clarté). Sur cette figure, l'empilement de couches semiconductrices a été gravé pour constituer le détecteur proprement dit. Dans la variante illustrée, ce détecteur présente une forme de croix. Cette forme est obtenue par gravure ionique réactive des couches, jusqu'à la couche isolante 62 en SiO₂. Il ne reste donc plus, sur la couche isolante, que la petite surface utile au détecteur de champ magnétique. Tout le reste de la surface de GaAs a disparu. Cette photolithographie peut être obtenue à travers un masque de résine en utilisant les mires d'alignement qui ont servi à fabriquer la partie magnétique de la tête, jusqu'aux concentrateurs.

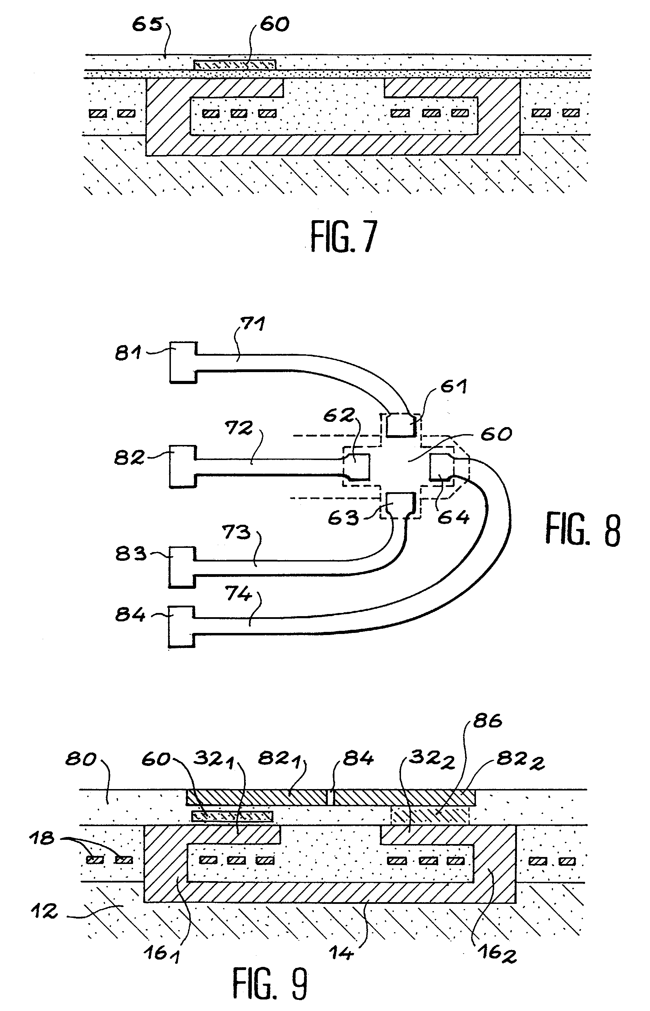

Sur l'ensemble ainsi obtenu, on dépose ensuite, comme illustré sur la figure 7, une couche isolante 65, par exemple en silice, par LPCVD ("Low Pressure Chemical Vapor Deposition") à base température (220°C) pour ne pas détruire le détecteur 60. Cette couche encapsule ce dernier. Il apparaît donc, au-dessus du détecteur, une couche mince d'isolant, d'épaisseur de l'ordre de 0,1 micromètre.

On réalise alors une photolithographie suivie d'une gravure de la couche 65 pour créer des ouvertures au-dessus des quatre extrémités du détecteur 60. On dépose ensuite un métal pour créer des plots de contact 61, 62, 63, 64 représentés sur la figure 8. Ces contacts doivent être ohmiques. On peut utiliser à cette fin, comme métal, un allage Ni/AuGe/Au. On forme également des connexions 71, 72, 73, 74 reliant les plots de contact 61, 62, 63, 64 à des plots de sortie 81, 82, 83, 84. Ces derniers peuvent être reliés à des intraconnexions non représentées, qui traversent tout le substrat semiconducteur 12, pour déboucher sur la face opposée du substrat où seront réalisées les connexions de sortie de la tête.

La figure 9 illustre les dernières étapes du procédé de réalisation et la tête finalement obtenue. Après avoir déposé une fine couche d'isolant 80 (par exemple de la silice d'environ 0,1 micromètre d'épaisseur) sur la totalité de l'ensemble pour isoler les plots et connexions, on forme, par des opérations bien connues de l'homme de l'art, deux pièces polaires 82₁, 82₂ séparées par un entrefer 84. Ces opérations sont décrites par exemple dans EP-A-0 152 326 ou EP-A-0 262 028.

Dans la zone 86 symétrique du détecteur 60, on peut combler l'intervalle par un matériau magnétique, afin de diminuer la réluctance du circuit magnétique.

On observera que, dans la tête obtenue, l'élément détecteur du champ magnétique est bien placé très près de l'entrefer 84 et qu'il est traversé perpendiculairement à son plan par les lignes de champ, ce qui est indispensable à son bon fonctionnement, notamment dans le cas d'un détecteur à effet HALL.

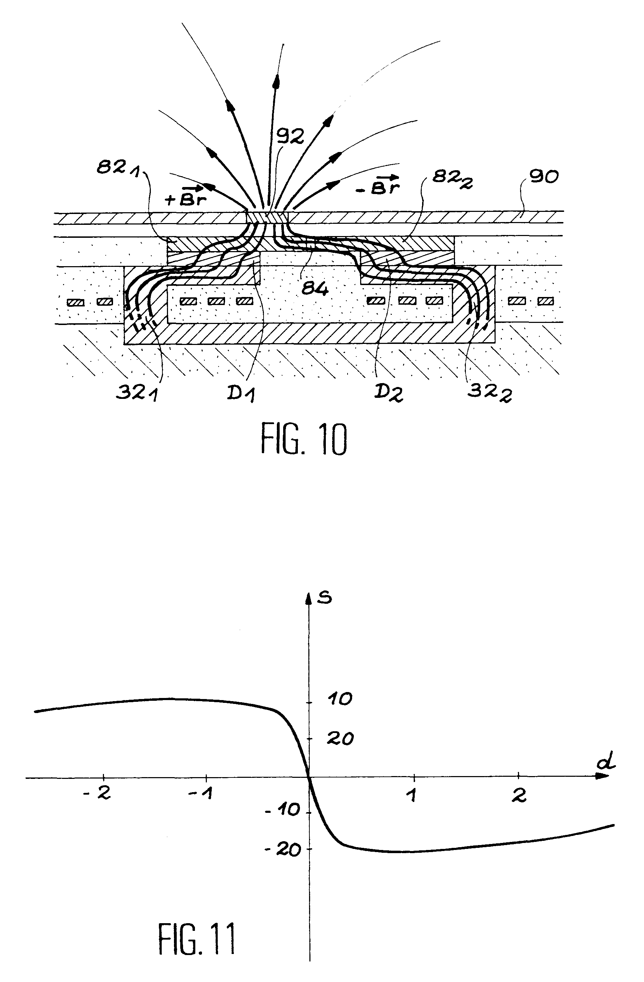

Dans la description qui précède, on ne réalise qu'un seul détecteur de champ 60 entre la pièce polaire 82₁ et le concentrateur 32₁. Il va de soi que l'invention couvre le cas où l'on réalise un second détecteur entre l'autre pièce polaire 82₂ et l'autre concentrateur 32₂. C'est ce qui est représenté sur la figure 10, où les deux détecteurs portent les références D1 et D2. Sur cette figure est également représenté le support d'enregistrement 90 et une transition magnétique isolée 92 d'où partent des lignes de champ magéntique représentées par des lignes fléchées.

Il apparaît que les lignes de champ traversent les détecteurs dans le même sens. Mais le flux va dépendre de la position de la transition 92 par rapport à l'entrefer. Si la transition 92 est exactement en regard de l'entrefer, le flux dans D1 est égal au flux dans D2. Mais, si la transition est du côté de D1, le flux dans ce détecteur sera plus grand que dans D2 et vice-versa.

Le tableau suivant, qui résulte d'une simultation effectuée par l'inventeur, donne, dans sa première colonne, l'écart en micromètre de la transition par rapport à l'entrefer (le signe moins correspond à une transition située à gauche et le signe plus à une transition située à droite), dans sa seconde colonne le flux traversant le détecteur D1 en unité arbitraire, dans sa troisième colonne le flux traversant le détecteur D2 et, dans sa dernière colonne, la différence des flux D1-D2.

**Tableau 1**

| **Ecart** | **Flux D1** | **Flux D2** | **D1-D2** |
|---|---|---|---|
| -2 | 21 | 3 | +18 |
| -1 | 21 | 6 | +15 |
| -0,3 | 20 | 9 | +11 |
| 0 | 15 | 15 | 0 |
| +0,3 | 9 | 20 | -11 |
| +1 | 6 | 21 | -15 |
| +2 | 3 | 21 | -18 |

La figure 11 montre le signal S obtenu en connectant les deux détecteurs D1, D2 en série mais en opposition de phase. Ce signal varie en fonction de l'écart d de la transition par rapport à l'entrefer. Il est symétrique et s'annule pour d=0. Alors qu'un seul détecteur conduirait à un signal d'amplitude maximum 21 (en unité arbitraire) deux détecteurs montés en série et opposition de phase conduisent à une amplitude de 2x18 soit 36, dans la même unité. Le gain est donc appréciable.

L'invention qui vient d'être décrite peut utiliser n'importe quel détecteur à semiconducteur. Ces dispositifs sont connus. On pourra en trouver une description, suivant leur mode de réalisation, dans les articles suivants :
- H.P. BALTES et R.S. POPOVIC
   "Integrated Semiconductor Magnetic-Field Sensor", Proc. IEEE, 74 (1986) 1107-1132.
- S. KORDIC
   "Integrated Silicon Magnetic-Field Sensors, Sensors and Actuators", Proc. IEEE, 10 (1986) 347-378.
- J.E. LENZ
   "A Review of Magnetic Sensors", Proc. IEEE, 78 (1990) 973-989.
- S. TAKAMIYA et K. FUJIKAWA
   "Differential Amplification Magnetic Sensor", IEEE Trans. Electr. Dev. ED-19 (1972) 1085-1090.
- R.S. POPOVIC
   "The Vertical HALL-Effect Device", IEEE Electr. Dev. Lett. EDL-5 (1984) 357-358.

## Revendications

1. Procédé de réalisation d'une tête magnétique à détecteur de champ à semiconducteur, caractérisé par le fait qu'il comprend les opérations suivantes :
- on réalise un premier sous-ensemble comprenant un premier substrat semiconducteur (12) et un circuit magnétique (14, 16₁, 16₂, 32₁, 32₂) et on recouvre ce premier sous-ensemble d'une première couche (34) en un premier matériau isolant,
- on réalise un second sous-ensemble comprenant un second substrat semiconducteur (40) recouvert de. couches semiconductrices (46, 48, 50) aptes à constituer un détecteur de champ magnétique et on recouvre ce second sous-ensemble d'une seconde couche (52) en un second matériau isolant,
- on assemble le premier et le second sous-ensembles en mettant en contact les première et seconde couches (34, 52) en premier et second isolants,
- on fait disparaître le second substrat semiconducteur (40),
- on grave les couches semiconductrices (46, 48, 50) pour constituer au moins un détecteur de champ magnétique (60) (D1, D2),
- on dépose sur le(s) détecteur(s) (60) une couche isolante (65),
- on forme sur cette couche isolante deux pièces polaires (82₁, 82₂) séparées par un entrefer (84).

2. Procédé selon la revendication 1, caractérisé par le fait que le premier substrat semiconducteur (12) est en silicium dopé.

3. Procédé selon la revendication 1, caractérisé par le fait que le premier isolant de la première couche (34) recouvrant le premier sous-ensemble est la silice.

4. Procédé selon la revendication 1, caractérisé par le fait que le second substrat semiconducteur (40) est en un semiconducteur présentant une mobilité électronique supérieure à 5000 cm²/Vs.

5. Procédé selon la revendication 4, caractérisé par le fait que le second substrat semiconducteur (40) est en GaAs monocristallin.

6. Procédé selon la revendication 4, caractérisé par le fait que l'on dépose sur le second substrat semiconducteur (40) une première couche semiconductrice épitaxiée (44).

7. Procédé selon la revendication 1, caractérisé par le fait que la première couche semiconductrice (44) déposée sur le second substrat (40) est en un semiconducteur pris dans le groupe constitué par AlAs, AlGa, AlGaAs.

8. Procédé selon la revendication 6, caractérisé par le fait que l'on dépose sur la première couche semiconductrice (44) une couche semiconductrice à puits quantiques (46) encadrée par deux couches semiconductrices (48, 50).

9. Procédé selon la revendication 1, caractérisé par le fait que le second isolant de la seconde couche (52) déposée sur le second sous-ensemble est identique au premier isolant de la première couche (34) déposée sur le premier sous-ensemble.

10. Procédé selon la revendication 1, caractérisé par le fait que pour assembler le premier et le second sous-ensemble, on effectue un traitement de surface de la première (34) et de la seconde couche isolante (52) et on. plaque l'une sur l'autre ces deux couches (34, 52).

11. Procédé selon la revendication 10, caractérisé par le fait que le traitement de surface consiste soit en un décapage de surface, soit en une gravure ionique réactive.

12. Procédé selon la revendication 1, caractérisé par le fait que pour assembler le premier et le second sous-ensembles, on colle les deux sous-ensembles.

13. Procédé selon la revendication 1, caractérisé par le fait que, pour assembler le premier et le second sous-ensembles, on soude ces deux sous-ensembles.

14. Procédé selon la revendication 1, caractérisé par le fait que, pour faire disparaître le second substrat (40) après assemblage des deux sous-ensembles, on commence par réduire mécaniquement l'épaisseur du second substrat (40) puis on grave celui-ci.

15. Procédé selon la revendication 14, caractérisé par le fait qu'on grave ensuite les couches (44, 46, 48, 50) contenant la couche (46) sensible au champ magnétique pour obtenir la forme définitive du ou des détecteur(s) (60) (D1, D2).

16. Procédé selon la revendication 15, caractérisé par le fait qu'après avoir gravé le ou les détecteur(s) on recouvre l'ensemble d'une couche d'isolant, on grave dans cette couche des ouvertures en regard des extrémités du ou des détecteur(s) (60) (D1, D2), on remplit ces ouvertures de métal pour constituer des plots de contact (61, 62, 63, 64).

17. Procédé selon la revendication 1, caractérisé par le fait que l'on grave deux détecteurs de champ magnétique (D1, D2) dans l'empilement de couches semiconductrices (46, 48, 50), ces deux détecteurs (D1, D2) étant placés chacun sous une pièce polaire (32₁, 32₂).

18. Tête magnétique à détecteur(s) de champ à semiconducteur obtenue par le procédé de la revendication 1, caractérisée par le fait qu'elle comprend, sur un premier substrat semiconducteur (12), une partie de circuit magnétique (14, 16₁, 16₂, 32₁, 32₂), deux pièces polaires (82₁, 82₂) séparées par un entrefer (84) et, entre au moins l'une desdites pièces polaires (82₁) et la partie de circuit magnétique, au moins un détecteur de champ à semiconducteur (60).

19. Tête magnétique selon la revendication 18, caractérisée par le fait que le(s) détecteur(s) de champ à semiconducteur (60) (D1, D2) est (sont) placé(s) entre l'une des pièces polaires (82₁, 82₂)et l'un concentrateur de flux (32₁, 32₂).

20. Tête magnétique selon la revendication 19, caractérisé par le fait qu'elle comprend un premier détecteur (D1) placé entre une première pièce polaire (82₁) et un premier concentrateur (32₂) et un second détecteur (D2) placé entre une seconde pièce polaire (82₂) et un second concentrateur (32₂), ces deux détecteurs (D1, D2) étant connectés en série et en opposition de phase.
